# NEUE EUROPÄISCHE PATENTSCHRIFT

(11) **EP 3 558 631 B2**
(45) Veröffentlichungstag und Bekanntmachung des Hinweises auf die Entscheidung über den Einspruch: **11.06.2025**
(45) Hinweis auf die Patenterteilung: 27.10.2021
(21) Anmeldenummer: 17821525.7
(22) Anmeldetag: 12.12.2017
(51) Int. Cl.: B29C 49/48, B29C 49/78, B29C 49/06, B29C 49/12, B29C 49/36, B29L 31/00

(54) **VERFAHREN UND VORRICHTUNG ZUM BLASFORMEN VON BEHÄLTNISSEN MIT BEWEGLICHEM BODENTEIL**
METHOD AND DEVICE FOR BLOW MOULDING CONTAINERS WITH A MOVABLE BOTTOM PART
PROCÉDÉ ET DISPOSITIF POUR LE MOULAGE PAR SOUFFLAGE DE RÉCIPIENTS PRÉSENTANT UNE PARTIE DE FOND MOBILE

(30) Priorität: 23.12.2016 DE 102016125586
(43) Veröffentlichungstag der Anmeldung: 30.10.2019
(73) Patentinhaber: Krones AG, 93073 Neutraubling (DE)
(72) Erfinder: HINTERMEIER, Martin, 93073 Neutraubling (DE); HÜTTNER, Gerald, 93073 Neutraubling (DE); LAINE, Ludovic, 93073 Neutraubling (DE); STEINER, Andreas, 93073 Neutraubling (DE)
(74) Vertreter: Bittner, Bernhard
(86) Internationale Anmeldenummer: PCT/EP2017/082356
(87) Internationale Veröffentlichungsnummer: WO 2018/114462

(56) Entgegenhaltungen:
- DE-A1- 102012 110 023
- FR-A1- 3 019 486
- FR-A1- 3 029 133
- US-A1- 2014 203 481
- US-A1- 2015 290 867
- US-A1- 2015 298 386

## Beschreibung

Die vorliegende Erfindung bezieht sich auf ein Verfahren und eine Vorrichtung zum Umformen von Kunststoffvorformlingen zu Kunststoffbehältnissen und insbesondere Kunststoffflaschen. Derartige Verfahren und Vorrichtungen sind aus dem Stand der Technik seit Langem bekannt. Dabei werden üblicherweise erwärmte Kunststoffvorformlinge in Blasformen eingegeben und innerhalb dieser Blasformen mit Druck beaufschlagt, sodass ein Kunststoffbehältnis bzw. eine Kunststoffflasche ausgeformt werden kann. Dabei werden die Kunststoffvorformlinge üblicherweise mit unterschiedlichen Druckstufen beaufschlagt. So ist es beispielsweise bekannt, dass zunächst ein Vorblasdruck angelegt wird, der zur ersten Ausdehnung des Behältnisses dient, anschließend ein Zwischenblasdruck und schließlich ein Fertigblasdruck. Weiterhin ist es aus dem Stand der Technik bekannt, dass in die Behältnisse zu deren Expansion eine sogenannte Reckstange eingefahren wird, um die Behältnisse zu dehnen. Daneben sind aus dem Stand der Technik auch Verfahren bekannt, bei denen während des Expansionsprozesses ein Bodenteil der Blasform auf die Behältnisse zugestellt wird. Derartige Verfahren werden auch als Active-Base-Verfahren bezeichnet.

Vorrichtungen und Verfahren gemäß dem Stand der Technik sind in den Patentschriften US2015/290867A1, FR3019486A1, US2014/203481 A1, US2015/298386A1, DE102012110023A1, DE3408740A1, US3949034 und DE102004014653A1 beschrieben, und können zu einem besseren Verständnis der Erfindung beitragen.

Der vorliegenden Erfindung liegt die Aufgabe zugrunde, derartige Verfahren insbesondere im Hinblick auf die Ausformung der Kunststoffbehältnisse zu verbessern. Insbesondere soll die Ausformung der Bodenbereiche derartiger Behältnisse verbessert werden.

Diese Aufgaben werden durch die Gegenstände der unabhängigen Patentansprüche gelöst. Vorteilhafte Ausführungsformen und Weiterbildungen sind Gegenstand der Unteransprüche. Bei einem erfindungsgemäßen Verfahren zum Umformen von Kunststoffvorformlingen zu Kunststoffflaschen wird zunächst ein zu expandierender Kunststoffvorformling in eine Blasform eingebracht, wobei diese Blasform wenigstens zwei Seitenteile und ein gegenüber diesen Seitenteilen in einer Längsrichtung des Kunststoffvorformlings bewegliches Bodenteil aufweist. In einem weiteren Verfahrensschritt wird ein stangenförmiger Körper durch eine Mündung des Kunststoffvorformlings in das Innere des Kunststoffvorformlings eingeführt, insbesondere um diesen in dessen Längsrichtung zu dehnen. In einem weiteren Verfahrensschritt wird der Kunststoffvorformling mit einem ersten Druck beaufschlagt. Weiterhin wird der Kunststoffvorformling mit einem zweiten Druck beaufschlagt, wobei dieser zweite Druck von dem ersten Druck abweicht und höher ist als der erste Druck. In einem weiteren Verfahrensschritt wird der Kunststoffvorformling mit einem dritten Druck beaufschlagt, wobei dieser dritte Druck von dem zweiten Druck abweicht und höher ist als der zweite Druck.

Bei einer ersten hier nicht beanspruchten Ausgestaltung wird vor der Beaufschlagung des Kunststoffvorformlings mit dem dritten Druck und insbesondere wenigstens zeitweise während der Beaufschlagung des Kunststoffvorformlings mit dem zweiten Druck das Bodenteil in der Längsrichtung des Kunststoffvorformlings auf diesen zugestellt.

Bei dieser Ausgestaltung wird also vorgeschlagen, dass das Bodenteil während der Beaufschlagung des Kunststoffvorformlings mit dem Zwischenblasdruck (der hier als zweiter Druck bezeichnet wird) auf diesen zugestellt wird. Dabei ist es möglich und bevorzugt, dass die gesamte Zustellbewegung während dieser Phase d.h. während der Beaufschlagung mit dem zweiten Druck d.h. dem Zwischenblasdruck erfolgt. Es wäre jedoch auch denkbar, dass zumindest ein zeitlicher Anteil dieser Bewegung auch in einer anderen Phase als etwa während der Beaufschlagung des Kunststoffvorformlings mit dem ersten Druck und/oder während der Beaufschlagung des Kunststoffvorformlings mit dem dritten Druck erfolgt.

Bei einer erfindungsgemäßen zweiten Ausgestaltung wird nach der Beaufschlagung des Kunststoffvorformlings mit dem dritten Druck das Bodenteil in der Längsrichtung des Kunststoffvorformlings auf diesen zugestellt.

Bei dieser Ausgestaltung erfolgt die Zustellung des Bodenteils insbesondere während einer Spülphase des Kunststoffbehältnisses, und bevorzugt während eines Zeitraums, in welchem der Druck in dem Behältnis wieder sinkt. Bevorzugt kann dabei das Bodenteil bis zu einem Ende dieser Spülphase auf den Kunststoffvorformling zugestellt bleiben. Während der Spülphase herrscht bevorzugt in dem Behältnis ein geringerer Druck als während der Beaufschlagung mit dem dritten Druck bzw. während dem Fertigblasen. Durch diesen geringeren Druck ist es leichter möglich, das Bodenteil zuzustellen, da es nur gegen einen geringeren Druck ankommen muss.

Bei einer hier nicht beanspruchten dritten Ausgestaltung wird während der Beaufschlagung des Kunststoffvorformlings mit wenigstens einem der Drücke das Bodenteil in der Längsrichtung des Kunststoffvorformlings in wenigstens zwei zeitlich voneinander beabstandeten zeitlichen Abschnitten auf diesen zugestellt.

Sämtliche der drei hier beschriebenen Varianten zeichnen sich dadurch aus, dass das Bodenteil während oder nach der Beaufschlagung des Kunststoffvorformlings mit Druckluft auf diesen zugestellt wird. Allerdings unterscheiden sich die jeweiligen zeitlichen Abschnitte bzw. Häufigkeiten, in denen diese Zustellung des Bodenteils erfolgt. Die direkt nachfolgende Beschreibung bezieht sich auf sämtliche der genannten Ausgestaltungen, welche jeweils auf alle Ausgestaltungen anwendbar sind. Im Anschluss werden bevorzugte Varianten beschrieben, die sich auf die einzelnen Ausgestaltungen beziehen. Die beschriebenen Drücke sind dabei vorteilhaft während der jeweiligen Abschnitte nicht konstant. Bevorzugt erhöhen sich der erste Druck und der zweite Druck im Verlaufe der jeweiligen zeitlichen Abschnitte. Im Mittel ist jedoch der zweite Druck höher als der erste Druck. Der dritte Druck ist vorteilhaft über einen vorgegebenen Zeitraum im Wesentlichen konstant. Bevorzugt schließt sich die Beaufschlagung des Kunststoffvorformlings mit dem zweiten Druck unmittelbar an die Beaufschlagung des Kunststoffvorformlings mit dem ersten Druck an. Bevorzugt schließt sich die Beaufschlagung des Kunststoffvorformlings mit dem dritten Druck unmittelbar an die Beaufschlagung des Kunststoffvorformlings mit dem zweiten Druck an.

Bevorzugt erfolgt die Umschaltung auf die unterschiedlichen Drücke durch Schalten von Ventilen. So kann beispielsweise zur Erreichung des Übergangs von dem ersten Druck zu dem zweiten Druck ein erstes Ventil, welches die Zufuhr des ersten Drucks an die Kunststoffvorformlinge regelt bzw. bewirkt geschlossen werden und anstelle dessen ein zweites Ventil, welches die Zufuhr des zweiten Drucks regelt bzw. bewirkt geöffnet werden. Entsprechend kann auch bei der Umstellung von dem zweiten Druck hin zu dem dritten Druck ein Ventil, welches die Zufuhr des zweiten Drucks (genauer die Zufuhr von Luft unter dem zweiten Druck) bewirkt geschlossen werden und stattdessen ein weiteres Ventil, welches die Zufuhr von Luft unter dem dritten Druck bewirkt geöffnet werden.

Damit wird ein Übergang zwischen den einzelnen Drücken vorzugsweise durch das Schalten von wenigstens einem Ventil und bevorzugt von mehreren Ventilen ausgelöst.

Bevorzugt schließt sich an die Phase, in der das Kunststoffbehältnis mit dem dritten Druck beaufschlagt wird, eine Spülphase an, während derer die Kunststoffbehältnisse gespült werden. Auch diese Spülphase kann dabei durch ein Schalten von Ventilen eingeleitet werden, insbesondere in dem ein Ventil, welches den dritten Druck P2 zur Verfügung stellt geschlossen wird und anstelle dessen ein Ventil geöffnet wird, welches den Spülvorgang ermöglicht. Bevorzugt ist der Druck während der Spülphase geringer als der dritte Druck.

Damit wird im Rahmen des erfindungsgemäßen Verfahrens eine Bewegung des Bodenteils vorgeschlagen. Es wird darauf hingewiesen, dass die oben genannten Verfahrensschritte zwar in einer bestimmten Reihenfolge ausgeführt werden, jedoch auch gleichzeitig ablaufen können und bevorzugt auch gleichzeitig ablaufen. So ist es beispielsweise möglich, dass der stangenartige Körper durch die Mündung des Kunststoffvorformlings in diesen eingeführt wird und gleichzeitig der Kunststoffvorformling mit dem ersten Druck beaufschlagt wird. Weiterhin ist es auch möglich, dass die genannten Drücke nicht konstant sind, sondern über einen gewissen Zeitraum hinweg verändert, beispielsweise erhöht oder abgesenkt werden.

Bei einem weiteren bevorzugten Verfahren erfolgt eine Bewegung des stangenartigen Körpers linear und/oder mit konstanter Geschwindigkeit. Dies bedeutet, dass der stangenartige Körper mit einer linearen Bewegung in das Kunststoffbehältnis eingeführt wird. Bevorzugt wird der stangenartige Körper so weit in den Kunststoffvorformling eingeführt, dass er dessen Boden berührt. Damit ist der stangenartige Körper dazu geeignet und bestimmt, den Kunststoffvorformling in dessen Längsrichtung zu dehnen.

Bei einem weiteren bevorzugten Verfahren erfolgt auch eine Bewegung des Bodenteils linear und/oder mit konstanter Geschwindigkeit. Vorteilhaft wird dabei das Bodenteil in Richtung des Kunststoffvorformlings und/oder in Richtung des oben genannten stangenartigen Körpers zugestellt.

Bei einem weiteren bevorzugten Verfahren wird das ausgeformte Kunststoffbehältnis insbesondere nach der Beaufschlagung mit dem dritten Druck (und bevorzugt nach einem Spülabschnitt und einem Entlastungsabschnitt) aus der Blasform entnommen. Bevorzugt wird die Blasform geöffnet, um den Kunststoffvorformling in diese einbringen zu können. Dabei wird besonders bevorzugt ein Seitenteil der Blasform gegenüber dem zweiten Seitenteil der Blasform verschwenkt und zwar bevorzugt bezüglich einer Achse verschwenkt, welche parallel verläuft zu einer Längsrichtung des zu expandierenden Kunststoffvorformlings. Nach dem Einbringen des Kunststoffvorformlings wird die Blasform in gleicher Weise wieder durch Schwenken verschlossen.

Bei einer weiteren vorteilhaften Ausführungsform wird das Kunststoffbehältnis während seiner Expansion auf einer vorgegebenen Transportbahn bewegt und insbesondere auf einer kreisförmigen Transportbahn bewegt.

Weiterhin ist es möglich, dass das Kunststoffbehältnis durch den stangenartigen Körper hindurch mit Druckluft beaufschlagt wird. Es wäre jedoch auch möglich, dass die zum Expandieren des Kunststoffvorformlings nötige Druckluft zwischen dem stangenartigen Körper und einer Mündung des Kunststoffvorformlings geführt wird. Bei einem weiteren bevorzugten Verfahren wird die Blasform vor dem Beaufschlagen mit Luft verriegelt und besonders bevorzugt wird die Blasform nach dem Beaufschlagen mit Luft und vor dem Öffnen wieder entriegelt.

Bei einem weiteren bevorzugten Verfahren wird der stangenartige Körper vor oder während der Zustellung des Bodenteils wenigstens teilweise zurückgezogen. Auf diese Weise wird eine Kollision zwischen dem stangenartigen Körper und dem Bodenteil (gegebenenfalls mit der dazwischen liegenden Wandung des Kunststoffvorformlings) verhindert.

Bei einem weiteren bevorzugten Verfahren wird das Bodenteil um eine Strecke zugestellt, welche größer ist als 5 mm, bevorzugt größer als 10 mm und besonders bevorzugt größer als 15 mm und/oder das Bodenteil wird um eine Strecke zugestellt, welche kleiner ist als 30 mm, bevorzugt kleiner als 25 mm und besonders bevorzugt kleiner als 20 mm. Diese jeweiligen Zustellstrecken hängen auch von einem herzustellenden Behältnis ab. Es hat sich jedoch gezeigt, dass diese relativ kleinen Zustellstrecken sich in besonderer Weise eignen, um Böden herzustellen bzw. auszuformen.

Bei einem weiteren bevorzugten Verfahren wird der Kunststoffvorformling bzw. das aus diesem hergestellte Behältnis nach der Beaufschlagung mit dem dritten Druck wieder druckentlastet. Auf diese Weise kann nach dem Fertigblasen des Behältnisses Druck wieder aus dem Behältnis entlassen werden, sodass dieses schließlich der Blasform entnommen werden kann. In diesem Zusammenhang wird darauf hingewiesen, dass im Rahmen der vorliegenden Anmeldung aus Gründen der Vereinfachung überwiegend von der Beaufschlagung des Kunststoffvorformlings die Rede ist, wenngleich ab einem gewissen Zeitpunkt (jedenfalls bereits ab der Beaufschlagung mit dem dritten Druck) innerhalb der Blasform bereits ein ausgeformtes Behältnis vorliegt.

Insbesondere bei der ersten nicht erfindungsgemäßen Ausgestaltung wird das Bodenteil wenigstens zeitweise während der Beaufschlagung des Kunststoffvorformlings mit dem zweiten Druck zugestellt. Dabei ist es möglich, dass die Zustellbewegung auch noch zeitweise während der Beaufschlagung mit dem ersten Druck erfolgt und besonders bevorzugt erfolgt die Zustellung des Bodenteils während einer Umstellung von dem ersten Druck auf den zweiten Druck.

Vorteilhaft unterscheiden sich die Übergänge zwischen den einzelnen Drücken durch ein leichtes Absinken des Drucks im Zeitverlauf. Damit ist bevorzugt der jeweils nachfolgende Druck, das heißt beispielsweise der zweite Druck oder der dritte Druck, ab einem Zeitpunkt definiert, an dem er ausgehend von einem Minimalwert wieder ansteigt.

Bei einer weiteren Ausgestaltung wird das Bodenteil während einer Zeitdauer zugestellt, welche zwischen einer Sekunde und 20 Sekunden, bevorzugt zwischen einer Sekunde und 15 Sekunden, bevorzugt zwischen zwei Sekunden und zehn Sekunden und besonders bevorzugt zwischen zwei Sekunden und fünf Sekunden liegt. Vorteilhaft ist eine Geschwindigkeit, mit der das Bodenteil auf den Kunststoffvorformling zugestellt wird, einstellbar.

Bei allen der oben genannten Ausgestaltungen ist bevorzugt der zweite Druck größer als 3,5 bar, bevorzugt größer als 5 bar, bevorzugt größer als 7 bar und besonders bevorzugt größer als 10 bar und besonders bevorzugt größer als 12 bar. Weiterhin ist bevorzugt der zweite Druck kleiner als 20 bar, bevorzugt kleiner als 18 bar und besonders bevorzugt kleiner als 17 bar.

Bei einer weiteren vorteilhaften Ausgestaltung, welche insbesondere für die oben beschriebene zweite Ausgestaltung anwendbar ist, wird der stangenartige Körper vor der Beaufschlagung des Kunststoffvorformlings mit dem dritten Druck wenigstens teilweise zurückgezogen. Vorteilhaft wird der stangenartige Körper wenigstens so weit zurückgezogen, wie dies erforderlich ist, um den Boden zuzustellen. Vorteilhaft wird der stangenartige Körper in einem weiteren Verfahrensschritt vollständig zurückgezogen. Vorteilhaft ist bei dieser Ausgestaltung das Bodenteil nach der Beaufschlagung des Kunststoffvorformlings mit dem dritten Druck vollständig nach oben, also auf den Kunststoffvorformling bzw. das zu diesem Zeitpunkt bereits ausgeformte Behältnis zugestellt.

Vorteilhaft liegt für sämtliche Ausgestaltungen der Erfindung der erste Druck in einem Bereich zwischen 1 bar und 12 bar, bevorzugt zwischen 1 bar und 10 bar und besonders bevorzugt zwischen 1 bar und 8 bar.

Der dritte Druck liegt besonders bevorzugt in einem Bereich zwischen 15 bar und 50 bar, bevorzugt zwischen 17 bar und 40 bar, besonders bevorzugt zwischen 20 bar und 40 bar und besonders bevorzugt zwischen 20 bar und 38 bar.

Bei einer weiteren vorteilhaften Ausgestaltung, welche sich insbesondere auf die oben erwähnte dritte Ausgestaltung bezieht, wird das Bodenteil zwischen den beiden zeitlich voneinander beabstandeten Abschnitten (in denen es auf den Kunststoffvorformling zugestellt ist) wenigstens teilweise wieder zurückgezogen (in Richtung einer unteren Ruheposition). Bei dieser Ausgestaltung wird also das Bodenteil zunächst auf den Kunststoffvorformling zugestellt, anschließend wenigstens teilweise wieder zurückgezogen, um erneut auf den Kunststoffvorformling zugestellt zu werden. Damit erfolgt bei dieser Ausgestaltung ein mehrfaches Zustellen des Bodenteils auf den Kunststoffvorformling.

Vorteilhaft liegt bei der dritten nicht erfindungsgemäßen Ausgestaltung ein zeitlicher Abschnitt wenigstens teilweise nach der Beaufschlagung mit dem zweiten Druck. Bevorzugt liegt wenigstens ein zeitlicher Abschnitt nach dem Beginn der Beaufschlagung des Kunststoffvorformlings mit dem zweiten Druck. So ist es beispielsweise möglich, dass eine erste Zustellbewegung auf den Kunststoffvorformling während eines Vorblasprozesses beginnt und eine weitere Zustellbewegung erst zeitlich nach der Beaufschlagung mit dem zweiten Druck bzw. in einem Zeitraum, in dem der Druck im Inneren des Kunststoffvorformlings wieder absinkt.

Weiterhin wäre es auch möglich, dass beide Zustellbewegungen zeitlich nach der Beaufschlagung des Kunststoffvorformlings mit dem zweiten Druck und auch zeitlich nach der Beaufschlagung des Kunststoffvorformlings mit dem dritten Druck erfolgen. Vorteilhaft können bei dieser Ausgestaltung beide Zustellbewegungen in einem (zeitlichen) Abschnitt durchgeführt werden, in dem ein Druck innerhalb des Kunststoffbehältnisses wieder absinkt.

Bei einer weiteren vorteilhaften Variante der dritten Ausgestaltung liegen beide zeitliche Abschnitte wenigstens teilweise nach der Beaufschlagung mit dem dritten Druck. Besonders bevorzugt verbleibt das Bodenteil bei einer weiteren Ausgestaltung während unterschiedlich langer Zeiträume in einem auf den Kunststoffvorformling zugestellten Zustand. Dabei ist es möglich, dass dieser erste Zeitraum (in dem das Bodenteil näher auf den Kunststoffvorformling zugestellt ist) länger ist, beispielsweise während der gesamten Beaufschlagung mit dem dritten Druck erfolgt. Weiterhin ist es auch möglich, dass der zweite Zeitraum länger ist. Auch ist es möglich, dass der erste Zeitraum nur für sehr kurze Zeit zugestellt wird, beispielsweise das Bodenteil nach oben gefahren und sofort wieder zurückgefahren wird.

Bei einem weiteren vorteilhaften Verfahren wird das Kunststoffbehältnis nach der Beaufschlagung mit dem dritten Druck mit einem Spüldruck beaufschlagt. Während dieser Phase sinkt der Druck innerhalb des Behältnisses deutlich ab. Damit ist bevorzugt dieser Spüldruck vergleichbar mit dem Druck des Zwischenblasens, d.h. dem oben genannten zweiten Druck. Wie weit während des Spülens der Druck in dem Behältnis absinkt, hängt davon ab, ob Blasluft recycelt werden soll oder nicht. Falls ein derartiges Druckluftrecycling vorgesehen ist, sinkt der Druck innerhalb des Behältnisses auf ca. 15 - 20 bar. Dies entspricht etwa dem Niveau des zweiten Drucks also des Zwischenblasdrucks.

Falls kein Recycling vorgesehen ist bzw. gegen die Umgebung ausgelassen werden soll, sinkt der Spüldruck auf ca. 6 - 10bar ab und liegt damit in einer Größenordnung des Drucks beim Vorblasen also dem ersten Druck P1. Vorteilhaft wird das Behältnis während des Spülvorgangs gekühlt und insbesondere durch aus diesem entweichende Druckluft gekühlt. An diese Spülphase schließt sich eine Entlastungsphase an, während welcher der restliche Druck aus dem Behältnis entweicht.

Bevorzugt werden diese einzelnen Drücke bzw. die Luft durch wenigstens ein und bevorzugt mehrere Reservoirs zur Verfügung gestellt. Bei diesen Reservoirs kann es sich beispielsweise um sog. Ringkanäle handeln, die zum Speichern von Luft dienen. Während der Beaufschlagung der Kunststoffvorformlinge herrscht bevorzugt in dem Reservoir bzw. dem Ringkanal, der den zweiten Druck zur Verfügung stellt, der höchste Druck. Dieser entspricht ungefähr dem dritten Druck, kann jedoch sogar noch etwas höher sein.

Die vorliegende Erfindung bezieht sich weiterhin auf eine Vorrichtung zum Umformen von Kunststoffvorformlingen zu Kunststoffflaschen mit wenigstens einer Transporteinrichtung, an der eine Vielzahl von Umformungsstationen angeordnet ist, wobei jede dieser Umformungsstationen eine Blasform aufweist, welche jeweils zwei bezüglich einander zum Öffnen und Schließen der Blasform bewegliche Seitenteile sowie ein Bodenteil aufweist, wobei dieses Bodenteil gegenüber den Seitenteilen in einer Längsrichtung des Kunststoffvorformlings und in einem geschlossenen Zustand der Blasform beweglich ist und wobei die Vorrichtung wenigstens eine Beaufschlagungseinrichtung aufweist, um die Kunststoffvorformlinge zu deren Expansion mit einem gasförmigen Medium und insbesondere mit Druckluft zu beaufschlagen sowie eine Steuerungseinrichtung, welche die Beaufschlagung der Kunststoffvorformlinge mit dem gasförmigen Medium derart steuert, dass diese zuerst mit einem ersten Druck, anschließend mit einem zweiten Druck, der oberhalb der ersten Drucks liegt, und schließlich mit einem dritten Druck, der oberhalb des zweiten Drucks liegt, beaufschlagt werden.

Erfindungsgemäß weist die Vorrichtung eine Antriebseinrichtung auf, welche dazu geeignet und bestimmt ist, das Bodenteil wenigstens zeitweise während der Beaufschlagung der Kunststoffvorformlinge gegenüber diesen zu bewegen, wobei das Bodenteil in einer ersten nicht beanspruchten Ausgestaltung vor der Beaufschlagung des Kunststoffvorformlings mit dem dritten Druck und besonders bevorzugt wenigstens zeitweise während der Beaufschlagung mit dem zweiten Druck in der Längsrichtung des Kunststoffvorformlings auf diesen zustellbar ist. Bei einer zweiten erfindungsgemäßen Ausgestaltung ist das Bodenteil nach der Beaufschlagung des Kunststoffvorformlings mit dem dritten Druck in der Längsrichtung des Kunststoffvorformlings auf diesen zustellbar.

In einer dritten nicht erfindungsgemäßen Ausgestaltung ist das Bodenteil in der Längsrichtung des Kunststoffvorformlings in wenigstens zwei zeitlich voneinander beabstandeten zeitlichen Abschnitten auf diesen zustellbar.

Bevorzugt dient dabei das zweite Zustellen zum Erzeugen eines Knicks in dem Bodenbereich.

Vorteilhaft weist die Vorrichtung einen stangenartigen Körper auf, der während der Expansion der Kunststoffvorformlinge in diese einführbar ist, um sie zu dehnen. Vorteilhaft weist die Vorrichtung auch eine Antriebseinrichtung zum Antreiben dieses stangenartigen Körpers auf. Bei dieser Antriebseinrichtung kann es sich insbesondere, aber nicht ausschließlich um eine elektromotorische, eine hydraulische, eine pneumatische oder magnetische Antriebeinrichtung handeln. Vorteilhaft weist die Vorrichtung eine Steuerungseinrichtung auf, welche auch die Bewegung dieses stangenartigen Körpers steuert. Vorteilhaft ist einer Bewegung des stangenartigen Körpers auf eine Bewegung des Bodenteils zumindest zeitweise abgestimmt. Dies bedeutet, dass der stangenartige Körper beispielsweise um einen gleichen Bereich zurückgezogen werden kann, um den das Bodenteil zugestellt wird.

Bei einer weiteren vorteilhaften Ausführungsform sind die beiden Seitenteile bezüglich einander schwenkbar und besonders bevorzugt bezüglich einer Achse schwenkbar, die parallel zu einer Längsrichtung des Kunststoffvorformlings ist.

Im Rahmen der Erfindung, genauer des ersten Anspruchs, wird daher ein Prozesszyklus in Bezug auf ein sogenanntes Active-Base- / Overstroke-Verfahren beschrieben. Dabei ist bevorzugt der Bodenhub auf einen Bereich zwischen 14,9 mm und 19,9 mm begrenzt. Bei einem erfindungsgemäßen Verfahren wird zunächst der Kunststoffvorformling in die Blasform eingelegt und bevorzugt anschließend die Blasform geschlossen und verriegelt. In diesem Abschnitt des Verfahrens befindet sich das Bodenteil bzw. die Bodenform in ihrer unteren Endlage.

Anschließend wird der stangenartige Körper bzw. die Reckstange so weit in den Kunststoff eingefahren, dass er eine Kuppe des Kunststoffvorformlings berührt. Anschließend wird mit der Beaufschlagung mit dem ersten Druck, das heißt dem Vorblasen, begonnen. Dabei ist es auch möglich, dass diese Beaufschlagung mit dem Druck vor dem Einfahren des stangenartigen Körpers bereits begonnen wird. Auf diese Weise kann bei einem geringen Druck die Blase bzw. der Blasformvorgang kontrolliert werden.

In einem weiteren Verfahrensschritt wird bei der erfindungsgemäßen Ausgestaltung insbesondere vor der Einleitung eines Bodenhubs und/oder einer Beaufschlagung mit dem zweiten Druck der stangenartige Körper bzw. die Spülstange hochgefahren und insbesondere in eine Position des in Endlage befindlichen bzw. kommenden Bodens gefahren.

Anschließend und nach der Beaufschlagung des Kunststoffvorformlings mit dem dritten Druck wird das Bodenteil auf den Kunststoffvorformling zugestellt bzw. in seine obere Endposition verfahren. Das Bodenteil befindet sich nach dem Ende der dritten Druckphase hinaus (das Fertigblasen) in seiner Höchstposition. In einem weiteren Verfahrensschritt erfolgt ein Spülen, wobei hier besonders bevorzugt die Spülstange bzw. der stangenartige Körper in einer zurückgezogenen Position ist. Schließlich fährt auch der stangenartige Körper wieder zurück.

Bei der erfindungsgemäßen Ausgestaltung erfolgt nach dem Vorblasen und dem Recken ein Zwischenblasen, das heißt eine Beaufschlagung des Kunststoffvorformlings mit dem zweiten Druck P2. Vorteilhaft fährt in diesem Verfahrensabschnitt der stangenartige Körper wenigstens teilweise zurück.

Bei dieser Ausgestaltung wird nach der Beaufschlagung mit dem dritten Druck und insbesondere während eines Spülens der Boden in eine obere Position verfahren. Dies kann jedoch auch bereits kurz vor dem Beginn des Spülens eingeleitet werden.

Mit dieser Ausgestaltung verläuft bevorzugt bis zum Ende der Beaufschlagung mit dem dritten Druck ein Standardprozess ab, bzw. ein Prozess, der sich nur in dem Reckweg, das heißt dem Bewegungsweg des stangenartigen Körpers von einem Standardprozess unterscheidet. Vorteilhaft wird während eines Zwischenblasens, das heißt während der Beaufschlagung mit dem zweiten Druck der stangenartige Körper zurückgefahren, beispielsweise auf eine unten genauer erläuterte Position zurückgefahren. Bevorzugt erfolgt nach der Beaufschlagung des Kunststoffbehältnisses mit dem dritten Druck eine Spülphase, bei der der Druck wieder abgesenkt wird und insbesondere eine Spülung des Behältnisses auftritt. Während dieser Phase wird das Bodenteil hochgefahren in eine sogenannte Boxingphase.

Vorteilhaft liegt ein Innendruck des Behältnisses bzw. ein Spüldruck in dieser Phase zwischen 4 bar und 20 bar, bevorzugt zwischen 6 und 12 bar.

Bei einem weiteren bevorzugten Verfahren wird nach dem Spülende das Bodenteil wieder nach oben gefahren.

Auch diese Ausgestaltung bietet den Vorteil, dass weniger Kraft zum Zustellen des Bodenteils nötig ist. Auch wird auf diese Weise weniger Druck in einer Overstroke-Einheit benötigt. Schließlich kann auch ein Verschleiß der gesamten Anlage (Dichtungen und Anschläge) reduziert werden. Daneben kann auch eine bessere Kontrolle erreicht werden, da die Kontur vollständig ausgeblasen wird. Schließlich können auch Spannungen reduziert werden, da das Material sich länger erholen kann.

In einem weiteren bevorzugten Verfahren, welches sich insbesondere auf die dritte nicht erfindungsgemäße Ausgestaltung bezieht, wird das Bodenteil während dem Zwischenblasen, das heißt während der Beaufschlagung mit dem zweiten Druck zu einer hohen Endposition verfahren und verstreckt somit den Boden des Behältnisses. Anschließend erfolgt ein Spülvorgang und das Bodenteil wird nochmals in seine höchste und anschließend in seine niedrigste Endposition bewegt, um eine Knickstelle zu schaffen, an welcher der Boden einfacher eingeklappt werden kann. Das Ende des Blasprozesses erfolgt wiederum wie aus dem Stand der Technik bekannt.

Bei einer zweiten Variante wird ein Standardverfahren wie oben beschrieben bis einschließlich dem Ende des Fertigblasens durchgeführt. Dies bedeutet, dass der Boden bis zum Ende der Beaufschlagung mit dem dritten Druckin seiner niedrigsten Endlage verbleibt. Diese kann sich wiederum wie oben erwähnt zwischen 14,9 mm und 19,9 mm unterhalb der Reckstangenposition befinden. Anschließend wird während des Spülvorgangs das Bodenteil in seine höchste Endposition verfahren und somit der Boden des Behältnisses verstreckt. Nach dem endgültigen Verstrecken fährt das Bodenteil in seine niedrigste Endposition zurück. Nun erfolgt ein Vorgang zur Generierung des Knicks. Hierzu wird das Bodenteil nochmals in seine höchste Endposition und anschließend wieder in seine niedrigste Endposition verfahren, um somit den Knick zu schaffen. Dieses Generieren des Knicks kann auch durch ein mehrmaliges Wiederholen des Bewegens der Bodenform erfolgen. Anschließend werden das Bodenteil und die Reckstange in ihre Prozessabschlussposition bewegt und das fertige Behältnis wird ausgegeben und an weitere Behandlungsanlagen übergeben.

Nach diesem Verfahrensschritt wird bei allen Ausgestaltungen ein Entlastungszyklus durchlaufen und nach Beendigung dieses Entlastungszyklus wird das Bodenteil wieder in seine untere Position verfahren bzw. bewegt. Schließlich wird das Kunststoffbehältnis nach dem Öffnen der Blasform als fertiggeblasene Flasche entnommen. Durch die vorliegende Erfindung wird eine verbesserte Kontrolle der Blasgeschwindigkeit erreicht. Eine weitere Kontrolle kann bevorzugt durch eine Einstellung des zweiten Drucks P2 erfolgen. Daneben wird auch ein größeres Prozessfenster ermöglicht, da sich die Blase langsamer entwickeln kann. Auf diese Weise wird auch eine höhere Behältnisqualität erreicht. Auch kann eine verbesserte Kontrolle der Wanddicken erfolgen, insbesondere können konstantere Wanddicken erreicht werden. Dieser zweite Druck P2 wird teilweise auch als Zwischenblasdruck (Pi) bezeichnet

Weitere Vorteile bestehen darin, dass eine geringere Kraft bei dem sogenannten Boxing, das heißt dem Bewegen des Bodenteils, nötig ist, da nicht bei dem höchsten dritten Druck entgegengefahren werden muss. Auf diese Weise kann auch die gesamte Umformungsstation für Drücke unterhalb 30 bar ausgeführt werden. Es wird weniger Druck benötigt und auch die Baugruppen werden weniger belastet.

Bevorzugt ist es möglich, dass das Bodenteil bzw. eine Bodenhubeinheit mit unterschiedlichen Drücken gefahren wird, damit die Geschwindigkeit des Hubs beeinflusst werden kann. Weiterhin ist es auch möglich, dass mit dem zweiten Druck die Geschwindigkeit der Blase bzw. des Blasvorgangs beeinflusst wird. Auf diese Weise können größere Prozessfenster erreicht werden.

Weitere Vorteile und Ausführungsformen ergeben sich aus den beigefügten Zeichnungen: Darin zeigen:
Fig. 1 : Eine grob schematische Darstellung einer Anlage zum Herstellen von Kunststoffbehältnissen;
Fig. 2 : Eine schematische Darstellung einer Umformungsstation;
Fig. 3 : Zwei Darstellungen zur Veranschaulichung einer Herstellung der Behältnisse;
Fig. 4 : Eine Darstellung eines nicht erfindungsgemäßen Verfahrens in einer ersten nicht erfindungsgemäßen Ausgestaltung;
Fig. 5 : Eine Darstellung eines erfindungsgemäßen Verfahrens in einer ersten erfindungsgemäßen Ausgestaltung;
Fig. 6 : Eine Darstellung eines erfindungsgemäßen Verfahrens in einer zweiten erfindungsgemäßen Ausgestaltung;
Fig. 7 : Eine Darstellung eines erfindungsgemäßen Verfahrens in der zweiten Ausgestaltung; und
Fig. 8 : Eine weitere Darstellung eines erfindungsgemäßen Verfahrens in der zweiten Ausführungsform.

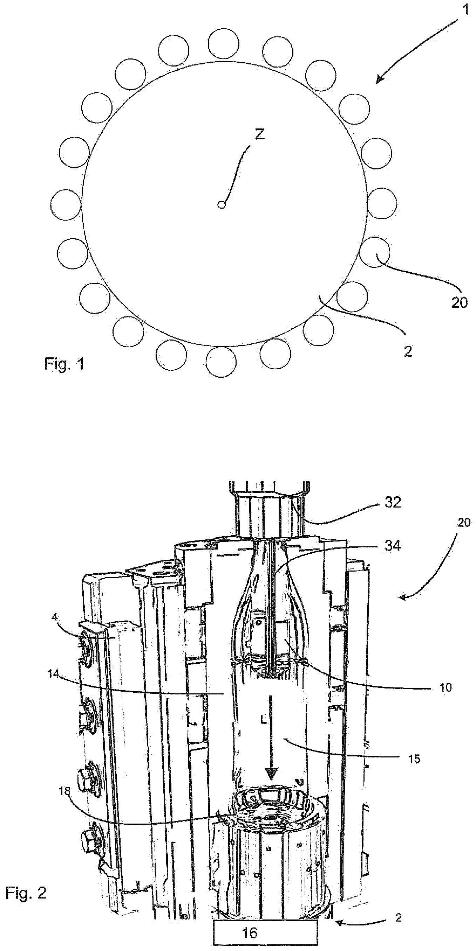

Fig. 1 zeigt grob schematisch eine erfindungsgemäße Vorrichtung 1 zum Herstellen von Kunststoffbehältnissen. Diese Vorrichtung weist einen bezüglich einer Drehachse Z drehbaren Träger 2 auf, der hier als sogenanntes Blasrad ausgeführt ist. An diesem Blasrad ist eine Vielzahl von Umformungsstationen 20 angeordnet. Während der Umformung der Kunststoffvorformlinge zu Kunststoffbehältnissen werden diese Umformungsstationen entlang des Transportpfads P, das heißt entlang eines kreisförmigen Pfads bewegt.

Fig. 2 zeigt eine schematische Darstellung einer Umformungsstation 20 bzw. einer Hälfte einer solchen Umformungsstation. Diese weist zwei Seitenteilträgerteile auf, von denen jedoch nur ein Seitenteilträgerteil 4 gezeigt ist. Diese Seitenteilträgerteile dienen jeweils zum Halten von Blasformseitenteilen, wobei auch hier nur das Blasformseitenteil 14 dargestellt ist. Diese Blasformseitenteile bilden gemeinsam mit einem Bodenteil 18 einen Hohlraum 15 aus, innerhalb dessen die Kunststoffvorformlinge 10 zu Kunststoffbehältnissen geblasen werden können. Das Bezugszeichen L bezieht sich auf eine Längsrichtung des Kunststoffvorformlings. Zwischen dem Seitenteilträgerteil 4 und dem Blasformseitenteil 14 ist eine Blasformträgerschale 16 angeordnet (und entsprechend auch zwischen dem zweiten (nicht gezeigten) Seitenteilträgerteil und dem zweiten (nicht gezeigte) Blasformseitenteil).

Das Bezugszeichen 32 kennzeichnet eine Blasdüse, die zur Beaufschlagung der Kunststoffvorformlinge mit Druckluft dient. Über diese Beaufschlagungseinrichtung können auf den Kunststoffvorformling die einzelnen Luftdrücke aufgebracht werden. Das Bezugszeichen 34 kennzeichnet den stangenartigen Körper bzw. die Reckstange, welche in das Behältnis einführbar ist. Das Bodenteil 18 kann durch eine nur schematisch dargestellte Antriebseinrichtung 36 in der Längsrichtung L gegenüber den Seitenteilen bewegt werden. Unter einer Bewegung auf den Kunststoffvorformling zu wird in Fig. 1 eine Bewegung nach oben verstanden.

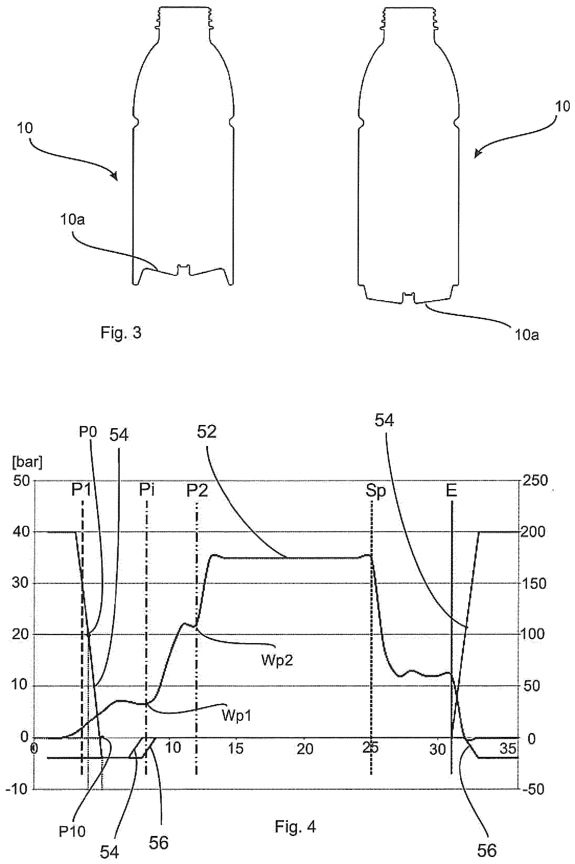

Fig. 3 zeigt zwei Darstellungen eines Kunststoffbehältnisses. Dabei zeigt die linke Darstellung eine Geometrie des Behältnisses vor der Boxingphase beim Spülen. Die rechte Darstellung zeigt eine Situation nach der Boxingphase, bei der Boden 10a des Behältnisses nach oben zur Erzeugung eines Knicks gedrückt wurde.

Fig. 4 zeigt eine erste Darstellung eines nicht erfindungsgemäßen Verfahrens. Dabei bezieht sich das Bezugszeichen 52 auf die Blaskurve bzw. den Druckverlauf.

Die Bezugszeichen P1, Pi, P2, Sp und E bzw. die entsprechenden vertikalen Linien kennzeichnen jeweilige zeitliche Abschnitte, ab denen jeweils neue Druckstufen verwendet werden. Der zweite Druck Pi wird auch als Zwischenblasdruck bezeichnet. Man erkennt, dass ab einem Zeitpunkt von ca. drei Sekunden das Kunststoffbehältnis mit einem bestimmten Druck P1, dem Vorblasdruck, beaufschlagt wird. Gleichzeitig wird die Reckstange in das Behältnis gefahren. Das Bezugszeichen 54 kennzeichnet den Verlauf der Reckstangenbewegung. Gegen Ende der Phase, in der mit dem ersten Druck P1 beaufschlagt wird, wird der stangenartige Körper leicht zurückgezogen und kurze Zeit versetzt wird auch das Bodenteil in eine obere Position verfahren.

Der gesamte Druckverlauf weist bevorzugt mehrere Wendepunkte (im mathematischen Sinne, d.h. Punkte, bei den die zweite Ableitung einer entsprechenden Funktion das Vorzeichen wechseln würde) auf. Bevorzugt geht definitionsgemäß der erste Druck P1 um Bereich eines Wendepunkts WP1 des Drucks in den zweiten Druck Pi über und dieser zweite Druck Pi geht wiederum im Verlauf eines Wendepunkts WP2 in den dritten Druck P2 über. Der Übergang von dem dritten Druck P2, der auch als Fertigblasdruck bezeichnet wird zu dem Spüldruck Sp, erfolgt kurz vor einem starken Absinken des Drucks und der Übergang von dem Spüldruck Sp zu dem Entlastungsdruck erfolgt wiederum vor einem starken Absinken des Drucks.

Das Bezugszeichen 56 kennzeichnet entsprechend den Bewegungsverlauf des Bodenteils. Man erkennt weiterhin, dass bei dieser Ausgestaltung das Bodenteil während der vollständigen Phase der Beaufschlagung des Behältnisses mit dem dritten Druck P2 in der nach oben zugestellten Position verbleibt. Der dritte Druck P2 steigt zunächst auf ein bestimmtes Niveau von ca. 35 bar an und verbleibt in dieser Phase für einen vorgegebenen Zeitraum, hier von ca. 12 Sekunden. In diesem zeitlichen Abschnitt wird das Behältnis umfänglich ausgeformt. Nach diesem Fertigblasen erfolgt ein Spülen des Behältnisses (Druck Sp), wobei hier der Druck wieder absinkt auf ein Niveau von ca. 10 bar. Schließlich wird in einer letzten Phase E (bzw. während einer Beaufschlagung mit dem Entlastungsdruck E das Behältnis entlastet und die Reckstange wieder nach oben zurückgezogen. In dieser Phase wird auch das Bodenteil wieder zurückgestellt, wie durch den letzten Abschnitt der Kurve 56 erkennbar ist.

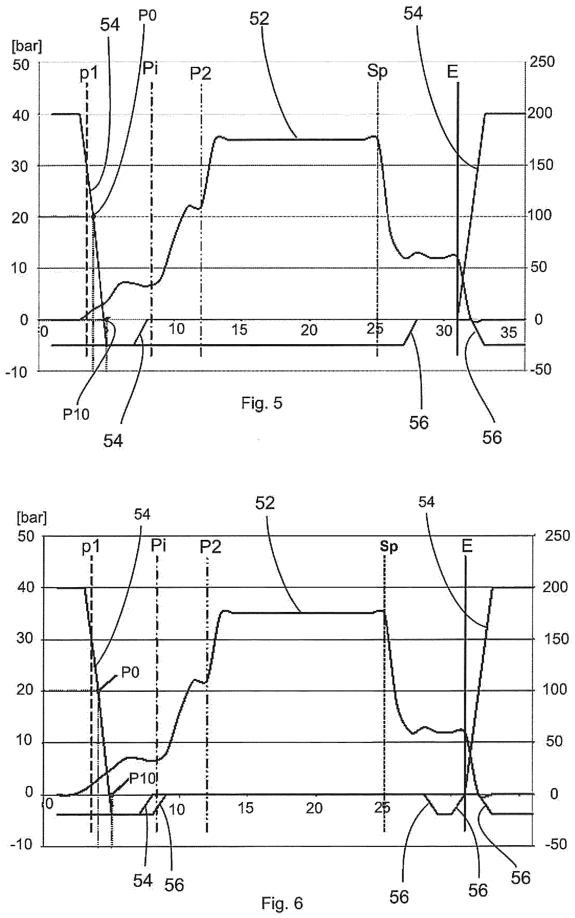

Fig. 5 zeigt eine weitere Ausgestaltung des erfindungsgemäßen Verfahrens. Der Druckverlauf 52 ist wie bereits in den vorangegangenen Verfahren beschrieben, das heißt hier ergeben sich keinerlei Änderungen. Auch wird die Reckstange wie bei der in Fig. 4 gezeigten Ausgestaltung noch während der Beaufschlagung des Behältnisses mit dem ersten Druck P1 wieder ein Stückchen zurückgezogen. Das Bezugszeichen P10 kennzeichnet die Position, auf welche die Reckstange zurückgezogen wird. Das Bezugszeichen P0 kennzeichnet eine weitere Position der Reckstange.

Anders als bei der in Fig. 4 gezeigten Ausgestaltung wird bei der in Fig. 5 gezeigten Ausgestaltung das Bodenteil hier erfindungsgemäß erst während der Spülphase bzw. dem Druck Sp nach oben zugestellt und während der Entlastungsphase E wieder zurückgestellt. Damit verbleibt bei diesem Verfahren das Bodenteil während der gesamten Zeitdauer der Beaufschlagung des Kunststoffvorformlings bzw. der Kunststoffflasche in einem auf diese Kunststoffflasche zugestellten (oberen) Zustand.

Hinsichtlich der Druckverläufe ist bei allen Ausgestaltungen zu erkennen, dass diese wie oben erwähnt sich jeweils aneinander anschließen. In jedem Fall ist jedoch ein mittlerer Druck in den einzelnen Phasen (Vorblasen, Zwischenblasen und Fertigblasen) unterschiedlich, das heißt der Vorblasdruck ist hier geringer als der Zwischenblasdruck im Mittel und der Zwischenblasdruck ist im Mittel geringer als der Fertigblasdruck. Mit anderen Worten wäre der mittlere Druck zwischen den vertikalen Linien P1 und Pi geringer als der mittlere Druck zwischen den vertikalen Linien Pi und P2 und dieser wiederum geringer als der mittlere Druck zwischen den vertikalen Linien P2 und Sp. Der mittlere Druck zwischen den Linien Sp und E ist wiederum geringer als der mittlere Druck zwischen den Linien P2 und Sp.

Bei dem in Fig. 6 gezeigten Verfahren wird das Bodenteil zunächst vor oder während der Beaufschlagung mit dem zweiten Druck auf den Kunststoffvorformling zugestellt und verbleibt in dieser nach oben gestellten Position bis zur vollständigen Beaufschlagung mit dem dritten Druck P2. Anschließend wird in dem Bereich zwischen den vertikalen Linien Sp und E das Bodenteil kurzzeitig in seine Ausgangsposition zurückgestellt und anschließend erneut auf den Kunststoffvorformling zugestellt. Dies erfolgt erfindungsgemäß im Bereich der Entlastungsphase E. Schließlich wird das Bodenteil noch während der Entlastungsphase in seine Ausgangsposition zurückverschoben. Die Reckstangenbewegung folgt bevorzugt diesen letztbeschriebenen Bewegungen des Bodenteils nicht, sondern bleibt in einer teilweise zurückgezogenen Position. Damit wird das Bodenteil bei diesem Verfahren genau zweimal auf den Kunststoffvorformling zugestellt und auch wieder zurückgezogen. Es wäre jedoch auch möglich, dass das Bodenteil häufiger als zweimal, beispielsweise dreimal oder viermal auf den Kunststoffvorformling zugestellt und wieder (wenigstens teilweise) zurückgezogen wird.

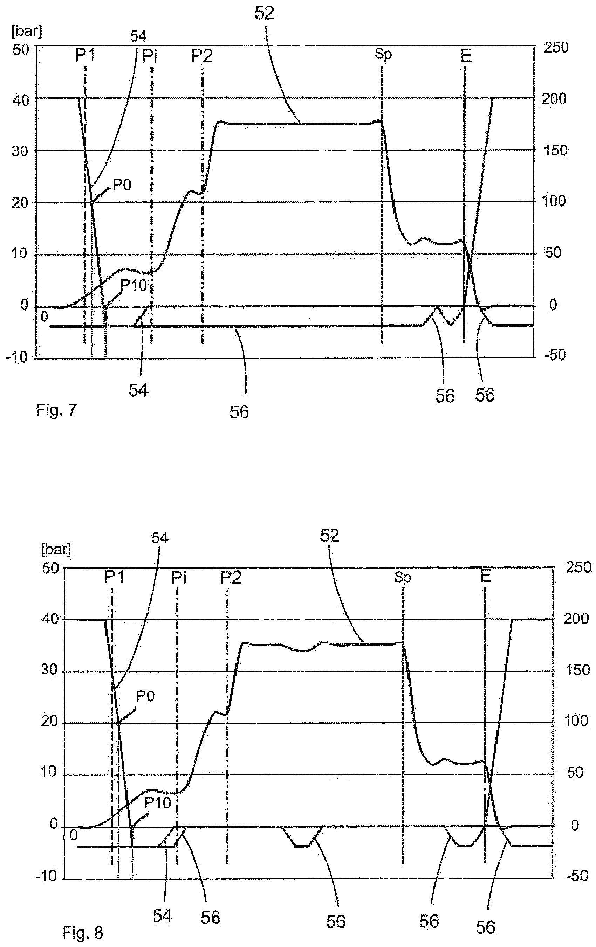

Fig. 7 zeigt eine weitere Ausgestaltung in einer Variante, wie sie in Fig. 6 gezeigt ist. Auch bei dieser Ausgestaltung wird das Bodenteil zweimal zu- und wieder zurückgestellt, allerdings erst nach der Beaufschlagung mit dem dritten Druck P2. Man erkennt, dass hier das Bodenteil kurzzeitig auf den Kunststoffvorformling zugestellt und gleich wieder zurückgestellt wird, um anschließend abermals auf den Kunststoffvorformling bzw. das nunmehr ausgeformte Kunststoffbehältnis zugestellt zu werden. Auch bei dieser Ausgestaltung wird schließlich das Bodenteil wieder in seine Ausgangsposition zurückgefahren.

Fig. 8 zeigt eine weitere Ausgestaltung des in Fig. 6 gezeigten Verfahrens. Man erkennt, dass hier das Bodenteil zunächst während der P1 - Phase und der beginnenden Pi - Phase zugestellt wird. Anschließend wird das Bodenteil während der Beaufschlagung des Kunststoffvorformlings mit dem dritten Druck P2 kurzzeitig zurückgezogen und wieder auf den Kunststoffvorformling zugestellt. Ein drittes Mal wird das Bodenteil erfindungsgemäß während der Spülphase Sp zurückgezogen, um dann während der Entlastungsphase erneut auf den Kunststoffvorformling (bzw. das zu diesem Zeitpunkt bereits ausgeformte Behältnis) zugestellt zu werden. Damit wird das Bodenteil bei dem in Fig. 8 gezeigten Verfahren dreimal auf den Kunststoffvorformling zugestellt und wieder zurückgezogen. Auch bei diesem Verfahren ist eine bessere Kontrolle der Blasgeschwindigkeit möglich. Insbesondere ist eine Kontrolle durch eine Einstellung des zweiten Drucks Pi (d.h. des Zwischenblasdrucks) möglich. Auch auf diese Weise kann die Behältnisqualität verbessert werden. Auch ist eine bessere Kontrolle der Wanddicken möglich.

### Bezugszeichenliste

- 1: Vorrichtung
- 2: Träger
- 4: Seitenteilträger
- 10: Kunststoffflasche (auch Kunststoffvorformling)
- 10a: Behältnisboden
- 14: Blasformseitenteil
- 16: Trägerschale
- 18: Bodenteil
- 15: Hohlraum
- 20: Umformungsstationen
- 32: Blasdüse
- 34: stangenartiger Körper, Reckstange
- 36: Antriebseinrichtung zur Bewegung des Bodenteils 18
- 52: Kurve des Druckverlaufs
- 54: Verlauf der Reckstangenbewegung
- 56: Verlauf der Bewegung des Bodenteils
- P1: erster Druck, Vorblasdruck
- Pi: zweiter Druck, Zwischenblasdruck
- P2: dritter Druck, Fertigblasdruck
- Sp: Spüldruck
- E: Entlastung(sdruck)
- P0, P10: Positionen der Reckstange
- Z: Drehachse
- P: Transportpfad
- WP1,WP2: Wendepunkte der Druckverlaufskurve

## Patentansprüche

1. Verfahren zum Umformen von Kunststoffvorformlingen zu Kunststoffflaschen mit den Schritten:
- Einbringen eines zu expandierenden Kunststoffvorformlings (10) in eine Blasform, wobei diese Blasform wenigstens zwei Seitenteile (14) und ein gegenüber diesen Seitenteilen in einer Längsrichtung (L) des Kunststoffvorformlings (10) bewegliches Bodenteil (18) aufweist
- Einführen eines stangenförmigen Körpers (34) durch eine Mündung des Kunststoffvorformlings (10) in das Innere des Kunststoffvorformlings (10)
- Beaufschlagung des Kunststoffvorformlings mit einem ersten Druck (P1)
- Beaufschlagung des Kunststoffvorformlings mit einem zweiten Druck (Pi), wobei dieser zweite Druck (Pi) von dem ersten Druck (P1) abweicht und höher ist als der erste Druck (P1)
- Beaufschlagen des Kunststoffvorformlings-_mit einem dritten Druck (P2), wobei dieser dritte Druck (P2) von dem zweiten Druck (Pi) abweicht und höher ist als der zweite Druck (Pi),
**dadurch gekennzeichnet, dass**
nach der Beaufschlagung des Kunststoffvorformlings (10) mit dem dritten Druck (P2) das Bodenteil (18) in der Längsrichtung (L) des Kunststoffvorformlings (10) auf diesen zugestellt wird.

2. Verfahren nach Anspruch 1,
**dadurch gekennzeichnet, dass**
der stangenartige Körper (34) vor oder während der Zustellung des Bodenteils (18) wenigstens teilweise zurückgezogen wird.

3. Verfahren nach wenigstens einem der vorangegangenen Ansprüche,
**dadurch gekennzeichnet, dass**
das Bodenteil (18) um eine Strecke zugestellt wird, welche größer ist als 5mm, bevorzugt größer als 10mm und besonders bevorzugt größer als 15mm und/oder dass das Bodenteil (18) um eine Strecke zugestellt wird, welche kleiner ist als 30mm, bevorzugt kleiner als 25mm und besonders bevorzugt kleiner als 20mm.

4. Verfahren nach wenigstens einem der vorangegangenen Ansprüche,
**dadurch gekennzeichnet, dass**
der Kunststoffvorformling nach der Beaufschlagung mit dem dritten Druck (P2) wieder druckentlastet wird.

5. Verfahren nach wenigstens einem der vorangegangenen Ansprüche,
**dadurch gekennzeichnet, dass**
das Bodenteil (18) nach der Beaufschlagung des Kunststoffvorformlings mit dem dritten Druck (P2) und bevorzugt nach einem Spülen des Kunststoffvorformlings und besonders bevorzugt während eines Entlastens des aus dem Kunststoffvorformling gefertigten Kunststoffbehältnisses wieder zurückgezogen wird.

6. Verfahren nach wenigstens einem der vorangegangenen Ansprüche,
**dadurch gekennzeichnet, dass**
der stangenartige Körper vor der Beaufschlagung des Kunststoffvorformlings mit dem dritten Druck (P2) wenigstens teilweise zurückgezogen wird.

7. Verfahren nach wenigstens einem der vorangegangenen Ansprüche,
**dadurch gekennzeichnet, dass**
das Bodenteil (18) während einer Zeitdauer zugestellt wird, welche zwischen 1sec und 20sec, bevorzugt zwischen 1sec und 15sec und bevorzugt zwischen 2sec und 10sec und besonders bevorzugt zwischen 2sec und 5sec liegt.

8. Verfahren nach wenigstens einem der vorangegangenen Ansprüche,
**dadurch gekennzeichnet, dass**
der zweite Druck größer ist als 3,5 bar, bevorzugt größer als 5bar, bevorzugt größer als 7bar und besonders bevorzugt größer als 10bar und bevorzugt größer als 12bar und/oder der zweite Druck kleiner ist als 20bar, bevorzugt kleiner als 18bar und besonders bevorzugt kleiner als 17bar.

9. Verfahren nach wenigstens einem der vorangegangenen Ansprüche,
**dadurch gekennzeichnet, dass**
das Kunststoffbehältnis nach der Beaufschlagung mit dem dritten Druck (P2) mit einem Spüldruck (Sp) beaufschlagt wird.

10. Vorrichtung zum Umformen von Kunststoffvorformlingen zu Kunststoffflaschen mit wenigstens einer Transporteinrichtung (2), an der eine Vielzahl von Umformungsstationen (20) angeordnet ist, wobei jede dieser Umformungsstationen eine Blasform aufweist, welche jeweils zwei bezüglich einander zum Öffnen und Schließen der Blasform bewegliche Seitenteile (14) sowie ein Bodenteil (18) aufweisen, wobei dieses Bodenteil (18) gegenüber den Seitenteilen (14) in einer Längsrichtung (L) des Kunststoffvorformlings (10) und in einem geschlossenen Zustand der Blasform beweglich ist und wobei die Vorrichtung (1) weiterhin wenigstens eine Beaufschlagungseinrichtung aufweist, um die Kunststoffvorformlinge zu deren Expansion mit einem gasförmigen Medium zu beaufschlagen sowie eine Steuerungseinrichtung, welche die Beaufschlagung der Kunststoffvorformlinge mit dem gasförmigen Medium derart steuert, dass diese zunächst mit einem ersten Druck (P1), anschließend mit einem zweiten Druck (Pi), der oberhalb des ersten Drucks (P1) liegt und schließlich mit einem dritten Druck (P2), der oberhalb des zweiten Drucks (Pi) liegt, beaufschlagt werden,
**dadurch gekennzeichnet, dass**
die Vorrichtung eine Antriebseinrichtung (36) aufweist, welche dazu geeignet und bestimmt ist, das Bodenteil (18) wenigstens zeitweise während der Beaufschlagung der Kunststoffvorformlinge (10) mit zu bewegen, wobei das Bodenteil (18) nach der Beaufschlagung des Kunststoffvorformlings mit dem dritten Druck (P2) in der Längsrichtung (L) des Kunststoffvorformlings (10) auf diesen zustellbar ist.

## Claims

1. Method for transforming plastic parisons into plastic bottles, comprising the following steps:
- introducing a plastic parison (10) which is to be expanded into a blow mould, wherein this blow mould has at least two lateral parts (14) and a base part (18) which is movable relative to these lateral parts in a longitudinal direction (L) of the plastic parison (10)
- inserting a rod-shaped body (34) into the interior of the plastic parison (10) through a mouth of the plastic parison (10)
- applying a first pressure (P1) to the plastic parison
- applying a second pressure (Pi) to the plastic parison, wherein this second pressure (Pi) deviates from the first pressure (P1) and is higher than the first pressure (P1)
- applying a third pressure (P2) to the plastic parison, wherein this third pressure (P2) deviates from the second pressure (Pi) and is higher than the second pressure (Pi),
**characterised in that**
after the third pressure (P2) is applied to the plastic parison (10), the base part (18) is advanced towards the plastic parison in the longitudinal direction (L) of the plastic parison (10).

2. Method according to claim 1,
**characterised in that**
the rod-like body (34) is at least partially retracted before or during the advancement of the base part (18).

3. Method according to at last one of the preceding claims,
**characterised in that**
the base part (18) is advanced by a distance which is greater than 5 mm, preferably greater than 10 mm and particularly preferably greater than 15 mm and/or that the base part (18) is advanced by a distance which is less than 30 mm, preferably less than 25 mm and particularly preferably less than 20 mm.

4. Method according to at least one of the preceding claims,
**characterised in that**
after the application of the third pressure (P2) the plastic parison is again relieved of pressure.

5. Method according to at least one of the preceding claims,
**characterised in that**
the base part (18) is retracted again after the application of the third pressure (P2) to the plastic parison and preferably after rinsing of the plastic parison and particularly preferably during pressure relief of the plastic container produced from the plastic parison.

6. Method according to at least one of the preceding claims,
**characterised in that**
before the application of the third pressure (P2) to the plastic parison the rod-like body is at least partially retracted.

7. Method according to at least one of the preceding claims,
**characterised in that**
the base part (18) is advanced for a duration which is between 1 sec and 20 sec, preferably between 1 sec and 15 sec and preferably between 2 sec and 10 sec and particularly preferably between 2 sec and 5 sec.

8. Method according to at least one of the preceding claims,
**characterised in that**
the second pressure is greater than 3.5 bar, preferably greater than 5 bar, preferably greater than 7 bar and particularly preferably greater than 10 bar and preferably greater than 12 bar and/or the second pressure is less than 20 bar, preferably less than 18 bar and particularly preferably less than 17 bar.

9. Method according to at least one of the preceding claims,
**characterised in that**
after the application of the third pressure (P2) a rinsing pressure (Sp) is applied to the plastic parison.

10. Apparatus for transforming plastic parisons into plastic bottles with at least one transport device (2) on which a plurality of transforming stations (20) are arranged, wherein each of these transforming stations has a blow mould, each of which has two lateral parts (14), which are movable with respect to one another for opening and closing the blow mould, as well as a base part (18), wherein this base part (18) is movable relative to the lateral parts (14) in a longitudinal direction (L) of the plastic parison (10) and in a closed state of the blow mould, and wherein the apparatus (1) furthermore has at least one application device in order to apply a gaseous medium to the plastic parisons for expansion thereof, as well as a control device which controls the application of the gaseous medium to the plastic parisons in such a way that first of all a first pressure (P1), then a second pressure (Pi) which is above the first pressure (P1), and finally a third pressure (P2) which is above the second pressure (Pi), are applied to the plastic parisons,
**characterised in that**
the apparatus has a driving device (36) which is suitable and intended to move the base part (18) at least temporarily during the application of pressure to the plastic parisons (10), wherein after the third pressure (P2) is applied to the plastic parison, the base part (18) can be advanced towards the plastic parison in the longitudinal direction (L) of the plastic parison (10).

## Revendications

1. Procédé destiné à former des préformes en plastique pour en faire des bouteilles en plastique avec les étapes de :
- introduction d'une préforme en plastique (10) à dilater dans un moule de soufflage, dans lequel ce moule de soufflage présente au moins deux parties latérales (14) et une partie de fond (18) mobile par rapport à ces parties latérales dans une direction longitudinale (L) de la préforme en plastique (10)
- insertion d'un corps (34) en forme de tige à travers un orifice de la préforme en plastique (10) jusqu'à l'intérieur de la préforme en plastique (10)
- sollicitation de la préforme en plastique avec une première pression (P1)
- sollicitation de la préforme en plastique avec une deuxième pression (Pi), dans lequel cette deuxième pression (Pi) diffère de la première pression (P1) et est plus élevée que la première pression (P1)
- sollicitation de la préforme en plastique avec une troisième pression (P2), dans lequel cette troisième pression (P2) diffère de la deuxième pression (Pi) et est plus élevée que la deuxième pression (Pi),
**caractérisé en ce que**
après la sollicitation de la préforme en plastique (10) avec la troisième pression (P2), la partie de fond (18) est présentée, dans la direction longitudinale (L) de la préforme en plastique (10), sur celle-ci.

2. Procédé selon la revendication 1,
**caractérisé en ce que**
le corps (34) en forme de tige est retiré au moins partiellement avant ou pendant la présentation de la partie de fond (18).

3. Procédé selon au moins l'une des revendications précédentes,
**caractérisé en ce que**
la partie de fond (18) est présentée à une distance qui est supérieure à 5 mm, de préférence supérieure à 10 mm et particulièrement de préférence supérieure à 15 mm et/ou **en ce que** la partie de fond (18) est présentée à une distance qui est inférieure à 30 mm, de préférence inférieure à 25 mm et particulièrement de préférence inférieure à 20 mm.

4. Procédé selon au moins l'une des revendications précédentes,
**caractérisé en ce que**
la préforme en plastique est à nouveau déchargée de la pression après la sollicitation avec la troisième pression (P2).

5. Procédé selon au moins l'une des revendications précédentes,
**caractérisé en ce que**
la partie de fond (18) est à nouveau retirée après la sollicitation de la préforme en plastique avec la troisième pression (P2) et de préférence après un rinçage de la préforme en plastique et particulièrement de préférence pendant un déchargement du récipient en plastique usiné hors de la préforme en plastique.

6. Procédé selon au moins l'une des revendications précédentes,
**caractérisé en ce que**
le corps en forme de tige est au moins partiellement retiré avant la sollicitation de la préforme en plastique avec la troisième pression (P2).

7. Procédé selon au moins l'une des revendications précédentes,
**caractérisé en ce que**
la partie de fond (18) est présentée pendant une durée qui se situe entre 1 sec et 20 sec, de préférence entre 1 sec et 15 sec et de préférence entre 2 sec et 10 sec et particulièrement de préférence entre 2 sec et 5 sec.

8. Procédé selon au moins l'une des revendications précédentes,
**caractérisé en ce que**
la deuxième pression est supérieure à 3,5 bar, de préférence supérieure à 5 bar, de préférence supérieure à 7 bar et particulièrement de préférence supérieure à 10 bar et de préférence supérieure à 12 bar et/ou la deuxième pression est inférieure à 20 bar, de préférence inférieure à 18 bar et particulièrement de préférence inférieure à 17 bar.

9. Procédé selon au moins l'une des revendications précédentes,
**caractérisé en ce que**
le récipient en plastique est sollicité avec une pression de rinçage (Sp) après la sollicitation avec la troisième pression (P2).

10. Dispositif destiné à former des préformes en plastique pour en faire des bouteilles en plastique avec au moins un équipement de transport (2) contre lequel sont agencées une pluralité de stations de formage (20), dans lequel chacune de ces stations de formage présente un moule de soufflage, lequel présente respectivement deux parties latérales (14) mobiles l'une par rapport à l'autre pour ouvrir et fermer le moule de soufflage, ainsi qu'une partie de fond (18), dans lequel cette partie de fond (18) est mobile par rapport aux parties latérales (14) dans une direction longitudinale (L) de la préforme en plastique (10) et dans un état fermé du moule de soufflage, et dans lequel le dispositif (1) présente en outre au moins un équipement de sollicitation pour solliciter, avec un milieu sous forme de gaz, les préformes en plastique quant à leur dilatation, ainsi qu'un équipement de commande, lequel commande la sollicitation des préformes en plastique avec le milieu sous forme de gaz de telle sorte que ces dernières soient sollicitées d'abord avec une première pression (P1), puis avec une deuxième pression (Pi) qui est supérieure à la première pression (P1), et enfin avec une troisième pression (P2) qui est supérieure à la deuxième pression (Pi),
**caractérisé en ce que**
le dispositif présente un équipement d'entraînement (36), lequel est adapté et déterminé pour au moins temporairement déplacer, pendant la sollicitation des préformes en plastique (10), la partie de fond (18) avec celles-ci, dans lequel la partie de fond (18) peut être présentée, après la sollicitation de la préforme en plastique (10) avec la troisième pression (P2), dans la direction longitudinale (L) de la préforme en plastique (10), sur celle-ci.
